# EUROPEAN PATENT SPECIFICATION

(11) **EP 2 860 016 B1**
(45) Date of publication and mention of the grant of the patent: **01.03.2017**
(21) Application number: 13188031.2
(22) Date of filing: 10.10.2013
(51) Int. Cl.: B29C 49/46, B29L 31/00, B29C 49/06, B29C 49/12, B67C 7/00, B29C 49/58, B65B 3/02

(54) **Method of delivering a liquid volume and associated apparatus**
Verfahren zur Bereitstellung eines Flüssigkeitsvolumens und zugehörige Vorrichtung
Procédé de distribution d'un volume de liquide et appareil associé

(43) Date of publication of application: 15.04.2015
(73) Proprietor: Discma AG, 6331 Hünenberg (CH)
(72) Inventor: Cavallero, Eric, 74500 Feternes (FR); Kannengiesser, Damien, 88190 Golbey (FR)
(74) Representative: Lavoix

(56) References cited:
- EP-A2- 2 366 657
- EP-A2- 2 447 038
- WO-A1-2013/099108
- DE-A1-102011 011 076
- FR-A1- 2 464 816

## Description

### Field of the Invention

The present invention relates to the field of manufacturing containers made of a polymer material, especially polyester. More particularly, it relates to the field of manufacturing polyester bottles, preferably polyethylene terephthalate (PET) bottles containing a liquid, preferably a liquid sensitive to air. Hence the invention claims a method of delivering a predetermined volume of a liquid product into a thermoplastic container.

The invention also relates to the apparatus associated to the claimed delivering method.

### Background

It is known to fabricate containers by blow molding, wherein a substantially tubular plastic tube commonly referred to as a "preform" is disposed in the cavity of a mold and expanded into the shape thereof by the injection of a pressurized fluid into said preform. This method lends itself well to the rapid fabrication of containers of consistently high quality.

A common variant of this process is stretch blow molding, in which a stretching rod is inserted into the preform and urged against an interior surface thereof, inducing the preform to deform along its longitudinal axis. This is particularly favored in that it enables one to exercise a greater deal of control over the longitudinal deformation of the preform, thereby enabling the production of a wider range of container shapes and sizes than by simple expansion alone.

A typical blow-molding apparatus comprises a mold, in which is provided a mold cavity in the form of the container to be produced. The preform is provided in a substantially tubular form globally resembling a test tube and which is disposed at least partially within the mold, conventionally being inserted into the mold cavity through a hole disposed in an upper surface of the mold.

In the conventional process, prior to being inserted into the mold for stretch-blow molding, the preform is heated (using radiative heating means) to facilitate its deformation during the forming of the container. The hot preform is then taken off and transported into a mold of a blow molding machine. Temperature of the preform once positioned in the mold should be above the glass transition temperature (about 100°C) so as to enable it to be formed by stretch-blow molding.

For many years, the PET bottles usually found on the market have been manufactured by the blow molding or stretch-blow molding of PET preforms using compressed air. But recently it has become known to effectuate the expansion of the preform by injecting an incompressible fluid into the cavity of the preform to induce the preform to expand. This new process is known as simultaneous forming and filling of a container using the injection blow molding technic. This offers a greater degree of control over the molding process, and when the injected liquid is the product to be packaged within the container, it allows combining the forming and filling steps to realize a considerable gain in process efficiency.

The use of incompressible fluid in the forming and filling process leads to reconsidering certain processes, especially for the preparation of the preform to be stretch-blow molded.

Indeed, during the preform's heating process and positioning in the mold, the preform is empty and its cavity full of air.

The presence of said air generates difficulties in the subsequent incompressible fluid stretch blow molding process: the air trapped in the preform before the forming/filling process mixes with the liquid during the liquid injection step and dissolves in the liquid. The air mixed in the liquid product is generally released some minutes after the filled container is formed. If the bottle is capped, the released air joins the head space of the bottle and remains in the head space of the bottle.

In case the liquid product is sensitive to air and more specifically to the oxygen of the air, the oxygen will oxidize the liquid product. This result in a possible degradation of the aspect, for example, color, and taste of the product. Such degradation is not acceptable in food and beverage industries.

Methods and apparatuses for blow moulding are disclosed in DE102011011076, WO2013099108, US2012299224, FR2464816 and EP2447038.

It is an object of the invention to provide a method of delivering a predetermined volume of liquid product into a thermoplastic container which resolves the disadvantages of the prior art as detailed above.

### Summary of the Invention

In this respects, the invention provides a method and an apparatus in accordance with the independent claims.

The proposed method makes it possible to avoid the presence of air trapped in the liquid and filled bottle. This is advantageous in that it participates to the stability of the product during its shelf life before consumption.

According to a further feature, the inert component is a liquid.

In case the liquid to be injected in the preform is water, the inert component is deoxygenized water. Deoxygenized water will have no interaction with the water contained in the formed container.

In a preferred embodiment, the preform is filled with the inert component prior to the step of heating the preform. By way of example, the preform is filled before it enters into the oven for heating the preform. This embodiment allows easy filling of the preform as the filling step takes place before the preform enters the oven used for heating the preforms.

In a possible embodiment, the preform is filled at the time the preform is being heated. For instance, the preform is filled while it is in the oven and being heated. This makes it possible to conceive a simple device to be integrated in the oven in order to fill the preforms.

According to another possible embodiment, the preform is filled during the transfer of the heated preform from the oven into the mold. In this specific case, the way to fill the preform with the inert component is also very simple.

According to another feature of the invention, before capping of the filled container, the method comprises a further step of inerting the head space of the filled container with nitrogen or with neutral gas. The inertion will contribute to the non-oxidation of the liquid end product by taking the place of the residual oxygen (of the air), if any, in the head space of the container.

The invention is further described with reference to the following example. It will be appreciated that the invention as claimed is not intended to be limited in any way by this example.

### Brief description of the Drawings

The invention is further described with reference to the following examples. It will be appreciated that the invention as claimed is not intended to be limited in any way by these examples.

Embodiments of the present invention will now be described, by way of examples, with reference to the accompanying figures in which:
- Figure 1 is a schematic view of an apparatus for simultaneously blowing and filing containers according to a first embodiment of the invention;
- Figure 2 a schematic view of an apparatus for simultaneously blowing and filing containers according to a second embodiment of the invention.

### Detailed description

As used in the following description, the words "comprises", "comprising", and similar words, are not to be interpreted in an exclusive or exhaustive sense. In other words, they are intended to mean including, but not limited to.

Any reference to prior art documents in this specification is not to be considered as an admission that such prior art is widely known or forms part of the common general knowledge in the field.

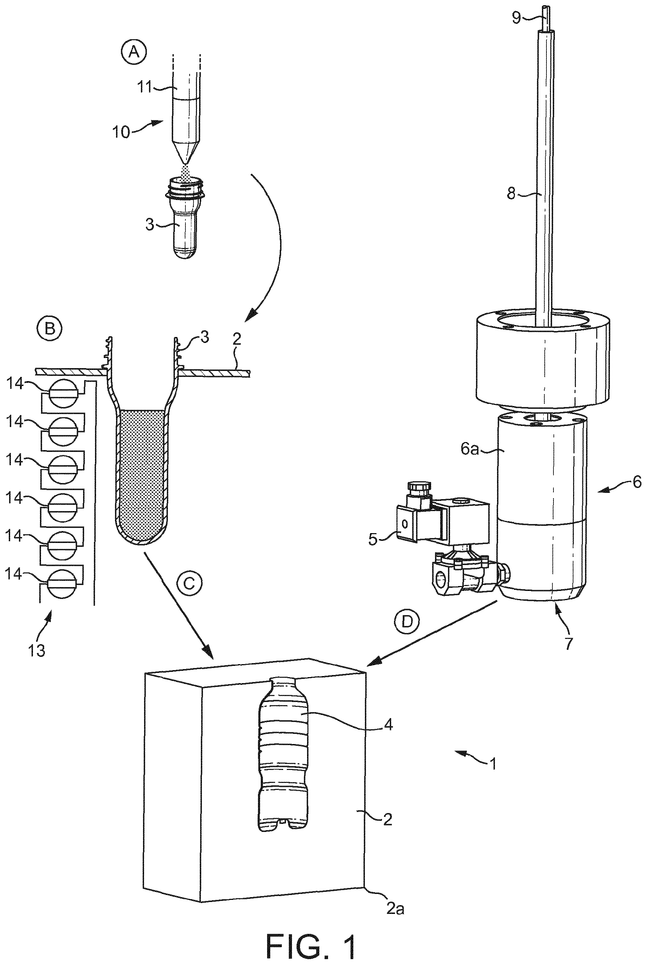

**Figure 1** schematically represents an apparatus 1 in which is implemented a method for delivering a predetermined volume of a liquid product in a container that has been obtained from a preform through a simultaneous blowing and filling process, according to the present invention.

The liquid in the final container, also defined as liquid product, is for example, water, flavored water, carbonated liquid products, etc.......

The preform which is used for the liquid injection blow molding of the container is first manufactured through a molding process and then heated before being positioned within a mold as disclosed in Applicant's patent EP 1529 620 B1.

The preform usually assumes the shape of a cylindrical tube closed at its bottom end and open at its opposite end.

The preform may be made of thermoplastic polymer, for example, polyethylene or terephthalate (PET)

As presented in **Figure 1****,** the apparatus 1 comprises a blowing mold 2 defining a cavity 4 for enclosing a preform 3, a liquid injection circuit 5 and injection means 6 for injecting a liquid into the preform 3 to simultaneously form and fill a container (not represented).

Mold 2 is for example a two-part mold of which the two parts or side halves define an inner cavity 4 when assembled together. For ease of representation, only a half 2a of the mold 2 is represented in Figure 1.

When the preform 3 is to be positioned in the mold 2, firstly, the two side halves are spaced apart from each other under the action of moving means (not represented in the drawing) for inserting a preform 3 there between.

The moving means may be piston devices for example.

Next the two side halves are moved back toward each other so as to come into contact along a joint plane.

The preform 3 is inserted into cavity 4 before the beginning of a blowing and filling step according to the invention.

Once the preform 3 has been positioned within mold 2 only the open end of the preform is visible from above the mold 2.

The shape of the cavity corresponds to the shape of the achieved container and it will be wholly occupied by the formed container at the end of the blowing and filling method.

It is to be noted that mold 2 may alternatively be composed of more than two parts depending on the manufacturing process.

For instance, a third part (base or bottom part) may be added at the bottom of the mold so as to define at least a part of the inner cavity bottom.

The liquid injection circuit 5 (only part of it is represented) provides the liquid to the injection means 6.

The injection means 6 comprise an injection head 6a which comes into a sealing contact (for liquid tightness purpose) with mold 2 and preform 3 and inject liquid into the preform 3 through an injection nozzle 7.

Apparatus 1 also comprises stretching means 8 for stretching preform 3 when enclosed within mold 2 prior to or time-shifted with the liquid injection step.

Stretching means 8 comprise a stretch rod 9 which is in a sliding connection with the injection nozzle 7. In **Figure 1** stretch rod 9 is in a retracted position before being used.

According to the invention, prior to injecting the liquid product in the preform, the preform is at least partially filled with an inert component in relation to the liquid to be injected. To be clear, the inert component is a component which is passive in relation to the liquid product to be injected in the preform to form the container and that will remain as an end product in the container.

The inert component aims at replacing the air inherently present in the preform so that no air is trapped in the liquid product during the liquid injection step with the final result that there is no air release in the head space of the container.

Therefore, the apparatus further comprises inert component supplying means 10 in order to fill, at least partially, the preform with the inert component.

The inert component supplying means 10 supplies comprises a filler 11 and associated filling circuits (not represented).

According to the nature of the inert component (gaseous, liquid or solid), filler 11 can have specific characteristics but it is a filler used in the bottling technology and well-known to the skilled person. It will not be described nor presented in details. Only a schematic representation is proposed.

In the present embodiment, the preform 3 is filled with the inert component prior to being positioned in the mold.

As an option, the preform is filled before heating the preform.

In a conventional blow molding process, the preform is first pre-heated, generally by use of ovens, radiant heaters or any equivalent device. The temperature to which the preform is heated is one above the vitreous transition point of the material. This renders the preform soft and pliable, and thus capable of flowing into the recesses of the mold. The working temperature of a blow molding process thus ranges from 65°C to 135°C, depending on the properties of the material used.

In **Figure 1****,** the heating means 13 are using infra-red lamps 14 positioned along the length of the preform 3.

When the inert component is dry ice, the proposed embodiment allows to heat the preform and inert component at the same time and to homogenize the temperature of the whole.

Hence, the process presents the following steps:
- Step A: The preform 3 is filled with the inert component;
- Step B: The preform 3 filled with the inert component is heated in order to have the polymer approaching its vitreous temperature;
- Step C: The preform 3 filled with the inert component is transferred into the cavity 4 of mold 2; and
- Step D: The liquid injection step takes place and the preform 3 is blow molded using the liquid product.

Therefore, during step D, the liquid product used as injection fluid.

According to a first, not forming a part of the present invention, the inert component is a gas. It can be Nitrogen, Carbone dioxide, Argon or any other inert gas.

The gas which is used should be safe for the food and beverage industry and easy to process.

In the case gas is Nitrogen; the inner volume of the preform is flashed with a dose of gaseous Nitrogen thereby replacing the air present in the preform.

This is advantageous in that Nitrogen is widely used in the food and beverage industry as being safe and rather economical. Furthermore, it is known that Nitrogen has anti-oxidation properties so that its use will avoid oxidation of the liquid product and helps keeping the integrity of the liquid product in the container.

According to a second alternative, the inert component is a liquid. In this case, the inert component should be inert in relation with the liquid to be injected in the preform for all aspects: for chemical ones but also in relation to dilution.

For example, when the liquid to be injected is water, a proposed inert component is deoxygenized water.

According to a third, not forming a part of the present invention, the inert component is solid.

As an example, dry ice can be used as inert component. The use of dry ice is convenient as there are some highly accurate delivering device existing thereby delivering the necessary dose of liquid Nitrogen. Furthermore, the dry ice, once delivered in the preform, will expand in the total volume of the preform and the air trapped in the preform will be expelled.

By filling the preform with an inert component prior to the liquid injection step, there is no more air dissolved in the liquid product used as blowing fluid.

In addition to the previous characteristics, the inert component has anti-oxidation properties to contribute to avoid oxidation of the liquid end product. This is the case of Nitrogen.

Concerning the timing of filling the preform with the inert component, several alternatives can be considered according to the production line of the filled container.

According to a further embodiment of the present invention (not represented), the preform is filled during the transfer of the heated preform in the mold: Step B takes place before step A and step A and C are processed at the same time

According to a further embodiment of the present invention (not represented), the preform is filled just before the liquid injection step takes place.

Pumps, valve devices and control means used during the liquid injection blow molding process aiming at simultaneous forming and filling the container are not represented and not detailed but are part of the skilled person knowledge.

Once the container is formed, the mold is opened by moving the two mold side halves away from each other so as to release container from the mold.

Before the opening of the mold, the container is capped by a capping head (not represented). The capping head can be directly integrated in the liquid injection blow molding apparatus.

Alternatively, the container can be capped after the release of the container from the mold.

A quick capping will participate to enhance to top load properties of the bottle by keeping high pressure in the head space. Indeed, the gas dissolved in the liquid product during the liquid injection step, will surface and come to the head space of the filled container thereby creating a high internal pressure in the container.

A quick capping will also help avoiding oxidation of the liquid end product.

A further inertion of the head space of the filled container can be proposed to further avoid oxidation of the liquid product in the container.

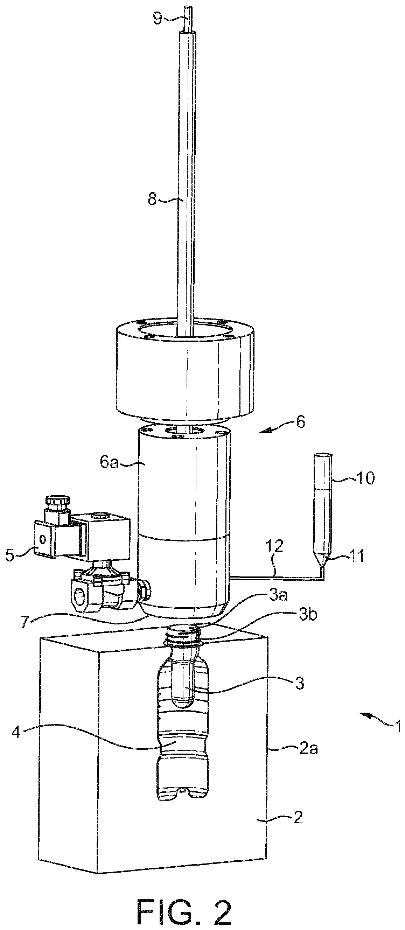

**Figure 2** schematically represents an apparatus 1 in which is implemented a method for delivering a predetermined volume of a liquid product in a container that has been obtained from a preform through a simultaneous blowing and filling process in which the preform is filled with the inert component while the preform is disposed in the mold, according to a second embodiment of the present invention.

The apparatus of **Figure 2** is similar to the one of Figure 1 with the same references and same operating process, except in that the preform is filled just before the liquid injection step takes place while the heated preform 3 is disposed in the mold 2.

**Figure 2** shows the preform 3 positioned in the mold 2 with the neck 3b of the preform lying on the upper face of the mold 2.

In this second embodiment the inert component supplying means 10 are integrated to the device comprising the injections means 6.

The inert component supplying means 10 comprise filler 11 and filling circuit 12 in order to bring the inert component stored in the filler 11 to the preform 3.

Filling circuit 12 is positioned near to the injection nozzle 7 or can be integrated into the injection nozzle 7.

Integration of the filling circuit 12 into the injection nozzle 7 leads to a reduced sized device.

In this embodiment, the preform 3 is conventionally heated and positioned in the mold 2 (similar to the one of the first embodiment). According to the preform 3 is then filled with the inert component prior to the liquid injection step in which the liquid is injected in the preform to expand it in the mold's cavity 4 to form the final container.

The inert component has the same characteristics as the ones presented in the frame of the embodiment of Figure 1.

Although the invention has been described by way of example, it should be appreciated that variations and modifications may be made without departing from the scope of the invention as defined in the claims. Furthermore, where known equivalents exist to specific features, such equivalents are incorporated as if specifically referred in this specification.

## Claims

1. Method of delivering a predetermined volume of a liquid product into a thermoplastic container formed from a heated preform (3) positioned in a mold (2) having an opening opposite an injection head (6a), wherein prior to injecting the liquid product in the preform (3) causing expansion of the container, the method includes a step of filling the preform (3) with an inert component in relation to the liquid product to be injected, the inert component being a liquid, the method being **characterized in that**
- the preform is filled with the inert component prior to the step of heating the preform,
- the preform is filled with the inert component at the time the preform is being heated or
- the preform is filled with the inert component during the transfer of the heated preform into the mold.

2. Method of delivering according to claim 1, wherein the inert component is selected in the list containing Argon, Carbon dioxide and Nitrogen.

3. Method of delivering according to claim 1, wherein, when the liquid to be injected is water, the inert component is deoxygenized water.

4. Method of delivering according to anyone of claims 1 to 3, wherein the preform (3) is filled with the inert component just before the liquid injection step takes place while the heated preform is disposed in the mold (2).

5. Method of delivering according to anyone of claims 1 to 4, wherein the inert component has anti-oxidation properties.

6. Method of delivering according to any of claims 1 to 5, wherein before capping of the filled container, the method comprises a further step of inerting the head space of the filled container with nitrogen.

7. An apparatus for delivering a predetermined volume of a liquid product into a thermoplastic container formed from a heated preform (3) in accordance with the method of claims 1-6, the apparatus comprising:
- a mold (2) for enclosing the preform (3), so as to leave access to the mouth (3a) of the preform (3);
- stretching means (8) for stretching the preform (3) in the mold (2);
- injection means (6) for injecting the liquid product through the mouth (3a) of the preform (3) so as to cause expansion of the preform within the mold (2) thereby obtaining a blown and filled container that comprises a dispensing opening,
wherein the apparatus further comprises liquid inert component supplying means (10), for filling the preform (3) with a liquid inert component prior to injecting the liquid product in the preform causing expansion of the container.

## Patentansprüche

1. Verfahren zum Abgeben eines vorab definierten Volumens eines flüssigen Produkts in einen thermoplastischen Behälter, aus einem erhitzten Vorformling (3) gebildet, der in einem Formteil (2) mit einer Öffnung gegenüber einem Spritzkopf (6a) positioniert ist, wobei das Verfahren vor dem Spritzen des flüssigen Produkts im Vorformling (3), wodurch eine Dehnung des Behälters bewirkt wird, einen Schritt des Füllens des Vorformlings (3) mit inerten Komponente, in Bezug auf das zu spritzende flüssige Produkt, beinhaltet, wobei die inerte Komponente eine Flüssigkeit ist, wobei das Verfahren **dadurch gekennzeichnet ist, dass**
- der Vorformling vor dem Schritt des Erhitzens des Vorformlings mit der inerten Komponente gefüllt wird,
- der Vorformling zum Zeitpunkt des Erhitzens des Vorformlings mit der inerten Komponente gefüllt wird, oder
- der Vorformling während des Übertragens des erhitzten Vorformlings in das Formteil mit der inerten Komponente gefüllt wird.

2. Abgabeverfahren nach Anspruch 1, wobei die inerte Komponente aus der Liste ausgewählt ist, enthaltend Argon, Kohlendioxid und Stickstoff.

3. Abgabeverfahren nach Anspruch 1, wobei, wenn die zu spritzende Flüssigkeit Wasser ist, die inerte Komponente deoxygeniertes Wasser ist.

4. Abgabeverfahren nach einem der Ansprüche 1 bis 3, wobei der Vorformling (3) kurz vor dem Flüssigkeitsspritzschritt mit der inerten Komponente gefüllt wird, während sich der erhitzte Vorformling im Formteil (2) befindet.

5. Abgabeverfahren nach einem der Ansprüche 1 bis 4, wobei die inerte Komponente oxidationshemmende Eigenschaften aufweist.

6. Abgabeverfahren nach einem der Ansprüche 1 bis 5, wobei das Verfahren vor dem Abdecken des gefüllten Behälters einen weiteren Schritt des Inertisierens des Kopfraums des gefüllten Behälters mit Stickstoff umfasst.

7. Vorrichtung zum Abgeben eines vorab definierten Volumens eines flüssigen Produkts in einen thermoplastischen Behälter, aus einem erhitzten Vorformling (3) gebildet, gemäß dem Verfahren nach den Ansprüchen 1 bis 6, wobei die Vorrichtung umfasst:
- ein Formteil (2) zum Umschließen des Vorformlings (3), so dass ein Zugang zum Mund (3a) des Vorformlings (3) bleibt;
- Streckmittel (8) zum Strecken des Vorformlings (3) im Formteil (2);
- Spritzmittel (6) zum Spritzen des flüssigen Produkts durch den Mund (3a) des Vorformlings (3), um eine Dehnung des Vorformlings innerhalb des Formteils (2) zu bewirken, wodurch ein geblasener und gefüllter Behälter erhalten wird, der eine Ausgabeöffnung umfasst,
wobei die Vorrichtung des Weiteren Mittel (10) zum Speisen einer flüssigen inerten Komponente zum Füllen des Vorformlings (3) mit einer flüssigen inerten Komponente vor Spritzen des flüssigen Produkts im Vorformling, wodurch eine Dehnung des Behälters bewirkt wird, umfasst.

## Revendications

1. Procédé de distribution d'un volume prédéterminé d'un produit liquide dans un récipient thermoplastique fabriqué à partir d'une préforme chauffée (3) positionnée dans un moule (2) ayant une ouverture opposée à une tête d'injection (6a), dans lequel avant l'injection du produit liquide dans la préforme (3) causant l'expansion du récipient, le procédé inclut une étape de chargement de la préforme (3) avec un composant inerte en lien avec le produit liquide à injecter, le composant inerte étant un liquide, le procédé étant **caractérisé en ce que**
- la préforme est chargée avec le composant inerte avant l'étape de chauffage de la préforme,
- la préforme est chargée avec le composant inerte au moment où la préforme est chauffée ou
- la préforme est chargée avec le composant inerte au cours du transfert de la préforme chauffée dans le moule.

2. Procédé de distribution selon la revendication 1, dans lequel le composant inerte est choisi dans la liste contenant l'argon, le dioxyde de carbone et l'azote.

3. Procédé de distribution selon la revendication 1, dans lequel, lorsque le liquide à injecter est de l'eau, le composant inerte est de l'eau désoxygénée.

4. Procédé de distribution selon l'une quelconque des revendications 1 à 3, dans lequel la préforme (3) est chargée avec le composant inerte juste avant que l'étape d'injection de liquide ait lieu tandis que la préforme chauffée est disposée dans le moule (2).

5. Procédé de distribution selon l'une quelconque des revendications 1 à 4, dans lequel le composant inerte présente des propriétés anti-oxydantes.

6. Procédé de distribution selon l'une quelconque des revendications 1 à 5, dans lequel avant le capsulage du récipient rempli, le procédé comprend une étape supplémentaire d'inertage de l'espace de tête du récipient chargé avec de l'azote.

7. Appareil de distribution d'un volume prédéterminé d'un produit liquide dans un récipient thermoplastique fabriqué à partir d'une préforme chauffée (3) selon le procédé des revendications 1 à 6, l'appareil comprenant :
- un moule (2) destiné à accueillir la préforme (3), de manière à laisser un accès à la bouche (3a) de la préforme (3) ;
- des moyens d'étirage (8) destinés à étirer la préforme (3) dans le moule (2) ;
- des moyens d'injection (6) destinés à injecter le produit liquide dans la bouche (3a) de la préforme (3) de manière à causer l'expansion de la préforme à l'intérieur du moule (2) pour ainsi obtenir un récipient soufflé et chargé qui comprend une ouverture de distribution,
dans lequel l'appareil comprend en outre des moyens d'approvisionnement en composant inerte liquide (10), destinés au chargement de la préforme (3) avec un composant inerte liquide avant l'injection du produit liquide dans la préforme causant l'expansion du récipient.
